Europäisches Patentamt

(19) European Patent Office

Office européen des brevets

(11) Numéro de publication: **0 1 1 1 429**
**B1**

(12) **FASCICULE DE BREVET EUROPEEN**

(45) Date de publication du fascicule du brevet:
**13.05.87**

(21) Numéro de dépôt: **83402250.1**

(22) Date de dépôt: **22.11.83**

(51) Int. Cl.⁴: **G 01 C 11/02, F 41 G 7/22**

(54) **Système de reconnaissance comportant un véhicule aérien tournant autour de son axe longitudinal.**

(30) Priorité: **30.11.82 FR 8220066**

(43) Date de publication de la demande:
**20.06.84 Bulletin 84/25**

(45) Mention de la délivrance du brevet:
**13.05.87 Bulletin 87/20**

(84) Etats contractants désignés:
**BE CH DE GB IT LI NL SE**

(56) Documents cités:
**FR - A - 1 545 998**
**FR - A - 1 600 930**
**US - A - 3 721 410**
**US - A - 4 245 560**

(73) Titulaire: **AEROSPATIALE Société Nationale Industrielle, 37 boulevard de Montmorency, F-75781 Paris Cédex 16 (FR)**

(72) Inventeur: **Laures, Pierre, 11 rue de Chastenaye, F-92290 Chatenay Malabry (FR)**

(74) Mandataire: **Bonnetat, Christian et al, Cabinet PROPI Conseils 23 rue de Léningrad, F-75008 Paris (FR)**

## Description

La présente invention concerne un système de reconnaissance comportant un véhicule aérien se déplaçant en tournant autour de son axe longitudinal.

On sait que les systèmes de reconnaissance aérienne, qui mettent en œuvre des moyens de prise de vue optiques (dans le domaine visible ou infrarouge) susceptibles d'être embarqués à bord d'un véhicule (tel qu'un avion ou un missile de reconnaissance) peuvent soit mettre à profit l'éclairement du paysage lorsque la puissance lumineuse est importante, soit capter l'énergie infrarouge rayonnée par le paysage ou les cibles à surveiller. Ces moyens de prise de vue sont essentiellement de trois types, à savoir:

– les appareillages photographiques qui donnent, dans le domaine visible ou dans celui du proche infrarouge, des images instantanées d'une portion du territoire surveillé, mais qui nécessitent soit le retour du véhicule à sa base, soit le développement et la lecture des clichés photographiques à bord du véhicule avant transmission par ondes radioélectriques vers ladite base. Outre le fait que de tels appareillages nécessitent un éclairement important de la cible pour donner des clichés exploitables, ils imposent de plus que le véhicule soit stabilisé pendant les prises de vue, à moins qu'ils soient du type décrit dans le brevet US-A 3 143 048 destiné à être monté à bord d'un engin se déplaçant tout en tournant autour de son axe. Dans ce système connu antérieur, la vitesse de défilement du film photographique d'une caméra panoramique est asservie à la rotation de l'engin. Ce système présente donc les autres inconvénients mentionnés ci-dessus, des appareillages photographiques et ne peut être adapté à une détection infrarouge dans la bande spectrale comprise entre 8 $\mu$m et 12 $\mu_m$;

– les caméras de télévision qui donnent une succession d'images obtenues par un balayage en lignes et colonnes d'un détecteur ou d'une mosaïque de détecteurs et qui nécessitent une stabilisation très bonne pour assurer le recouvrement d'images prises à des instants successifs (généralement tous les 1/25 seconde);

– les systèmes à balayage qui effectuent simplement un balayage en lignes, le déplacement du véhicule donnant la succession des lignes. De tels systèmes peuvent comporter une plate-forme stabilisée et un miroir tournant à grande vitesse pour la formation des lignes de balayage. Ils peuvent également, comme cela est décrit dans le brevet US-A 3 721 410, comporter un détecteur fixé rigidement à la paroi du véhicule, qui est alors soumis à une rotation autour de son axe longitudinal. Il va de soi que les systèmes à balayage à miroir tournant nécessitent une très grande stabilisation lors des prises de vue. Quant à eux, les systèmes de balayage à détecteur fixe et véhicule rotatif imposent audit véhicule une vitesse de rotation très importante (par exemple 200 révolutions par seconde) pour que le balayage de lignes effectué par le détecteur soit analogue à celui d'une image de télévision. Il en résulte que, dans ce dernier type de systèmes à balayage, le véhicule ne peut être qu'une sorte d'obus n'ayant pas une grande autonomie de vol et ne pouvant pas emporter une charge utile importante.

Ainsi, auchun des systèmes connus n'est adapté à une reconnaissance de longue durée au-dessus d'un territoire ennemi qui nécessite, pour pouvoir être menée à bien, avec une faible probabilité d'interruption par la défense ennemie, d'utiliser un véhicule de reconnaissance susceptible d'une très grande manœuvrabilité et disposant d'une grande autonomie de vol. En effet, pour échapper à la défense ennemie, il est nécessaire que le véhicule effectue des manœuvres de courte période et de forte accélération, ce qui est impossible pour un véhicule du type obus ou pour des véhicules devant assurer aux moyens de prise de vue une grande stabilisation afin d'obtenir des images claires ou un balayage à lignes exactement juxtaposées.

La présente invention a pour objet de remédier aux inconvénients des systèmes mentionnés ci-dessus et elle concerne un système de reconnaissance de très grandes manœuvrabilité et autonomie de vol.

A cette fin, selon l'invention, le véhicule aérien pour système de reconnaissance, susceptible de se déplacer au-dessus d'un territoire à surveiller en tournant autour de son axe longitudinal, des moyens de prise d'images étant disposés à bord dudit véhicule pour donner une image dudit territoire par observation selon un balayage hélicoïdal en relation avec la rotation dudit véhicule au moyen d'organes sensibles solidaires en rotation dudit véhicule et engendrant des signaux électriques représentatifs desdites images, est remarquable en ce que:

– ledit véhicule aérien est un missile autopropulsé susceptible d'effectuer des manœuvres de courte durée et de grande accélération; et

– lesdits organes sensibles sont formés par au moins un ensemble linéaire d'éléments photosensibles disposé parallèlement à l'axe longitudinal dudit missile, de façon que, à un instant pendant lequel ledit ensemble linéaire est dirigé vers ledit territoire, cet ensemble observe une bande élémentaire dudit territoire dont la longueur est parallèle à la portion instantanée correspondante de la trajectoire dudit mobile, lesdites bandes élémentaires balayant une large bande dudit territoire transversale à ladite portion de trajectoire, lorsque le missile tourne autour de son axe longitudinal, et ladite image dudit territoire étant formée par lesdites larges bandes transversales successives, lorsque ledit missile se déplace le long de ladite trajectoire.

Ainsi, à chacun des instants pendant lesquels ils sont dirigés vers le territoire, lesdits organes sensibles prennent l'image d'une bande élémentaire de ce territoire dont la longueur est parallèle à la trace du missile.

Par suite de la rotation de celui-ci autour de son axe longitudinal, cette bande élémentaire balaie une large bande de territoire, de direction transversale à ladite trace, c'est-à-dire qu'à chaque révolution du missile autour de son axe, lesdits organes sensibles balayent, pendant une partie de cette révolution, ladite large bande de territoire, au lieu de ne balayer qu'une ligne comme dans le cas du système du document US-A 3 721 410. Le véhicule du système selon l'invention peut donc ·tourner beaucoup moins vite que celui de ce dernier système, et, par suite, être constitué par un missile autopropulsé de grandes manœuvrabilité et autonomie, et non par un obus.

On remarquera d'ailleurs qu'il existe une différence fondamentale dans la formation des images selon le brevet US-A 3 721 410 et selon la présente invention. En effet, dans ce brevet antérieur, la rotation du véhicule engendre des lignes transversales à l'axe de celui-ci et l'avance dudit véhicule produit la succession desdites lignes et donc la formation de l'image en continu. En revanche, avec le système selon l'invention, l'image de chaque bande élémentaire de territoire de direction parallèle à l'avance du véhicule enregistrée à un instant donné par ledit ensemble linéaire d'éléments photosensibles forme une ligne; ainsi, dans ce cas, c'est la rotation du véhicule qui engendre la succession des lignes pour former une image partielle du territoire correspondant à une large bande de celui-ci de direction transversale à l'avance du véhicule, cette avance étant alors responsable de la succession des images partielles successives.

Ainsi, selon l'invention, l'image totale du territoire à surveiller est constituée de la juxtaposition d'une pluralité d'images partielles se succédant par suite de l'avance dudit missile, chacune desdites images partielles étant constituée de lignes qui se succèdent par suite de la rotation dudit missile autour de son axe.

Avantageusement, afin d'augmenter encore la longueur de ladite bande élémentaire, et donc réduire la vitesse de rotation du missile, lesdits organes sensibles comportent un agencement de plusieurs de ces ensembles linéaires d'éléments photosensibles disposés dans un alignement parallèle audit axe longitudinal du missile. Chacun desdits ensembles d'un agencement peut être pourvu de sa propre optique, lesdites optiques étant réglées pour que les images des bandes élémentaires de territoire données par lesdits ensembles linéaires de l'agencement se juxtaposent sans discontinuité ni recouvrement, de sorte que ledit agencement fournit une image formée de la juxtaposition des images desdits ensembles.

De préférence, pour pouvoir réduire encore plus la vitesse de rotation du missile, on prévoit une pluralité de tels agencements angulairement décalés autour de l'axe longitudinal dudit missile. Ainsi, chaque révolution du missile fournit les images d'autant de larges bandes du territoire qu'il y a d'agencements d'ensembles photosensibles dans ladite pluralité.

Avantageusement, les optiques des ensembles linéaires d'éléments photosensibles sont du type à focale variable en fonction de l'angle de roulis du missile et de l'altitude de celui-ci.

Le missile pourrait être télécommandé à partir d'une station disposée à l'extérieur du territoire à surveiller. Cependant, il est préférable que la mission du missile, y compris ses différentes conditions de vol et changements de conditions de vol soit effectuée de façon autonome et automatique à partir d'un programme préétabli embarqué à bord du missile, celui-ci comportant de façon connue les capteurs ou senseurs nécessaires au déroulement dudit programme.

Le missile peut comporter un émetteur HF et on prévoit alors une station au sol recevant, par l'intermédiaire dudit émetteur embarqué, les signaux d'images provenant des éléments photosensibles et les signaux provenant des différents capteurs ou senseurs donnant des paramètres de vol (vitesse, altitude, angle de roulis instantané, etc...). Ainsi, la reconstitution des images peut s'effectuer au sol, à l'extérieur du territoire observé, par exploitation des informations fournies par lesdits éléments photosensibles et capteurs.

Les figures du dessin annexé feront bien comprendre comment l'invention peut être réalisée.

Les figures 1 et 2 montrent, respectivement en vue de côté et en vue de dessus, un missile de reconnaissance pour le système selon l'invention.

La fig. 3 est une vue éclatée d'un ensemble de détection monté sur ledit missile.

La fig. 4 donne le schéma synoptique du dispositif de commande de pilotage et de saisie d'informations monté à bord du missile de reconnaissance.

La fig. 5 donne le schéma synoptique du dispositif de restitution d'informations disposé à 'extérieur du territoire surveillé, généralement au sol.

La fig. 6 illustre le principe de reconnaissance aérienne réalisé par le système selon l'invention.

Les figurs 7 et 8 montrent deux variantes de l'unité de restitution sur film des images prises par le missile de reconnaissance.

La fig. 9 montre schématiquement un film obtenu par les unités des figures 7 et 8.

Sur ces figures, des références identiques désignent des éléments semblables.

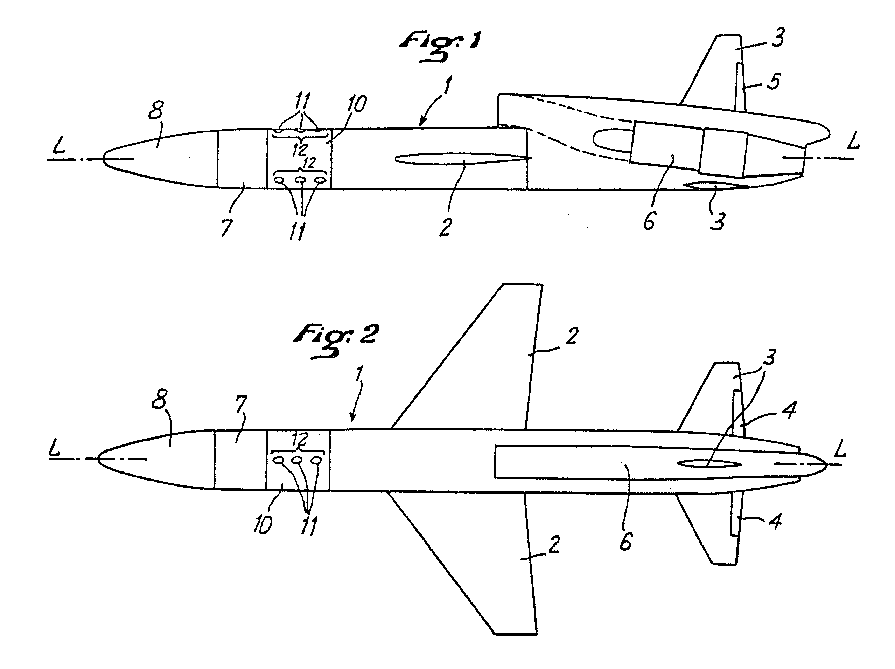

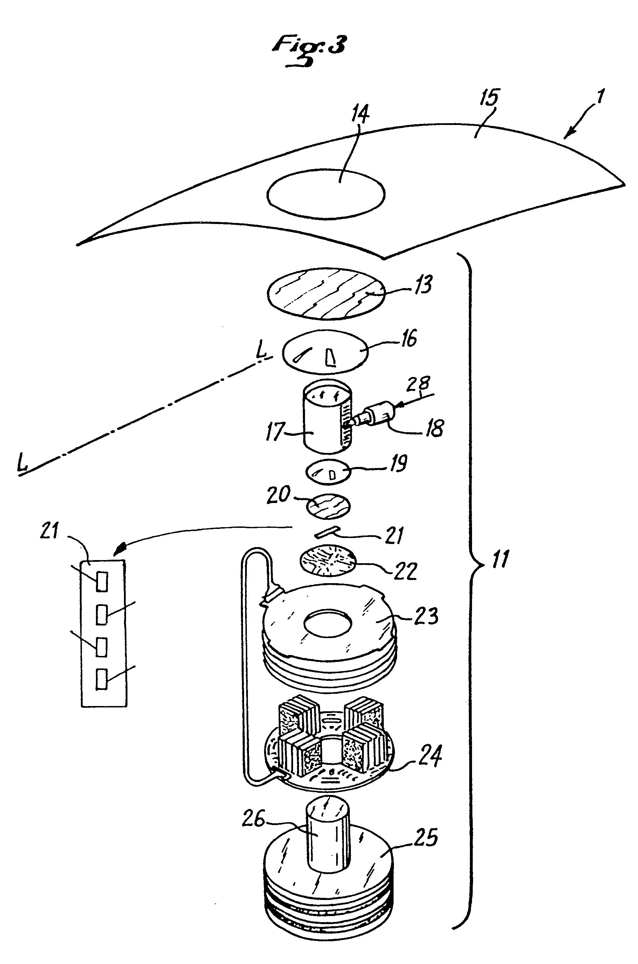

L'exemple de réalisation de missile 1, utilisé dans le système selon l'invention et montré sur les figures 1 et 2, est du type autopropulsé, éventuellement récupérable et est capable d'effectuer des manœuvres à fort facteur de charge, tout en ayant lors de prises de vue une vitesse sensiblement horizontale et en tournant sur lui-même autour de son axe longitudinal L-L à une vitesse angulaire réglable. Pour cela, le missile 1 comporte des ailes 2, un empennage 3, des gouvernes de profondeur 4, une gouverne de direction 5 et un propulseur 6.

A l'intérieur du missile 1 sont prévus:
– un dispositif de guidage et de pilotage 7 commandant les manœuvres dudit missile et définissant la trajectoire à partir d'un programme et de senseurs embarqués, tels qu'une plate-forme inertielle et des accéléromètres (non représentés) permettant de plus de reconstituer les images;

– un ensemble 8 comprenant un émetteur HF et un dispositif de stockage d'informations, pourvu notamment d'antennes omnidirectionelles 9 (voir la figure 5) pour transmettre les informations au sol;

– une partie optique 10 pourvue de moyens électroniques nécessaires à l'élaboration des informations. Cette partie optique 10 comporte par exemple neuf ensembles de detection identiques 11, répartis en trois agencements 12 de trois ensembles 11. Les trois ensembles 11 d'un agencement 12 sont alignés parallèlement à l'axe L-L du missile 1 et les trois agencements 12 sont équirépartis autour dudit axe L-L, de sorte qu'ils sont décalés de 120° l'un de l'autre autour dudit axe.

Sur la figure 3, on a représenté en vue éclatée l'un desdits ensembles de détection 11. Comme on peut le voir, chaque ensemble 11, comporte:

– un hublot 13 destiné à obturer une ouverture 14 de forme correspondante prévue dans la paroi 15 du missile 1 et à protéger l'optique du milieu extérieur; dans le cas où l'ensemble de détection fonctionne en infrarouge, le hublot 13 peut être en germanium, puisque cette matière est transparente au rayonnement infrarouge;

– une lentille d'entrée 16;

– un bloc optique 17, constitué de lentilles dont au moins une est déplaçable sous l'action d'un moteur 18, afin de faire varier la distance focale dudit ensemble 11. Le moteur 18 est commandé par l'élaborateur d'ordres 28 du dispositif 8;

– une lentille de sortie 19;

– un filtre 20 pour sélectionner la bande de fréquence du rayonnement désiré pour les éléments photosensibles, et qui, de préférence, correspond à une longueur d'onde comprise entre 8 $\mu_m$ et 12 $\mu_m$;

– les éléments photosensibles 21 disposés sous la forme d'une ou plusieurs barrettes, par exemple deux, alignées parallèlement à l'axe longitudinal L-L du missile 1; chaque barrette peut comporter une pluralité (par exemple 128) d'éléments photosensibles, qui sont chacun par exemple constitués de plages semi-conductrices de tellurure de Cd–Hg ou de Pb–Sn de quelques dizaines de $\mu_m$ decôté, dans le cas où l'on opère dans la bande 8–12 $\mu_m$;

– un support 22 pour la ou les barrettes 21 servant de plus de réseau de connection pour celles-ci;

– un ensemble de câbles de raccordement 23 entre ledit support 22 et des préamplificateurs 24;

– un ensemble 24 de préamplificateurs et l'électronique associée ayant pour but d'amplifier successivement les signaux issus respectivement des éléments photosensibles des barrettes 21 lus séquentiellement; et

– un bloc de refroidissement 25, purvu d'un doigt 26 en contact avec les barrettes 1 et l'ensemble 24 pour mettre à la température optimale de fonctionnement les détecteurs et les préamplificateurs.

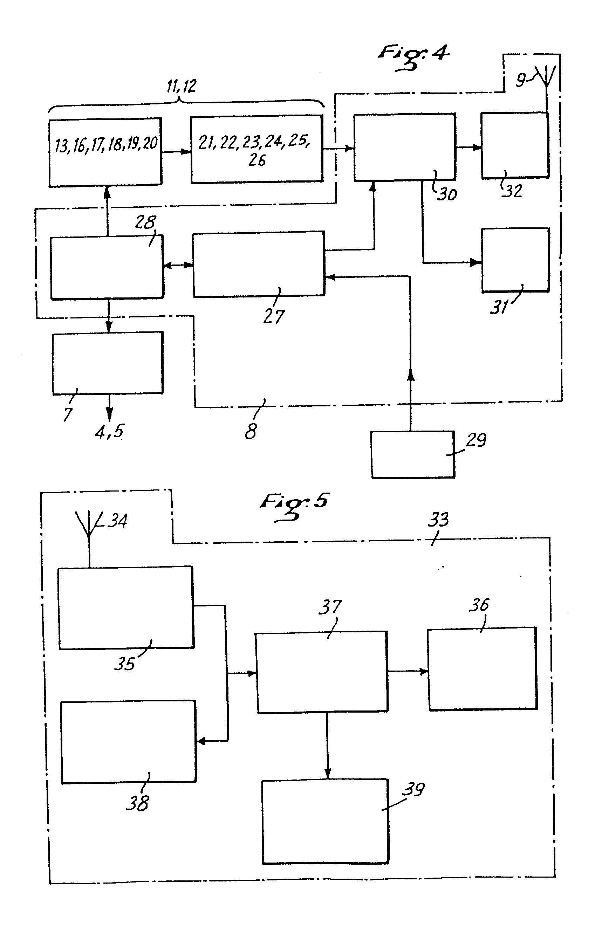

Comme on peut le voir sur la figure 4, l'ensemble électronique embarque 8 de saisie des informations comporte une centrale de mesure 27 en liaison avec un élaborateur d'ordres 28 qui, grâce aux mesures fournies par des capteurs et senseurs embarqués 29, commande à la fois les gouvernes 4,5 du missile 1 par l'intermédiaire du dispositif de guidage et de pilotage 7 et la focale des optiques 13, 16, 17, 18, 19, 20 par l'intermédiaire des moteurs 18. L'ensemble électronique 8 comprend de plus une unité de traitement 30 qui met en forme les signaux qu'elle reçoit des ensembles 11, grâce aux indications de la centrale de mesure 27 et les adresse à un dispositif de stockage 31, par exemple à bande magnétique, et à un émetteur HF 32, qui par les antennes 9 les transmet à une station d'exploitation 33, qui est disposée à l'extérieur du territoire surveillé et qui peut présenter la structure dont le schéma synoptique est donné par la figure 5. Une telle station d'exploitation 33 est pourvue d'une antenne de réception 34 et du récepteur HF 35 adapté pour fournir à une unité de restitution 36, après traitement dans une unité 37, les éléments permettant de reconstituer les images de la zone surveillée par le missile 1. La station 33 peut comporter de plus un dispositif de stockage 38 des informations reçues, ainsi qu'une console de visualisation 39. Dans l'unité de traitement 37, on sépare les signaux d'image issus des détecteurs 21 des mesures de vitesse, d'angle de roulis et d'incidence issus des capteurs 29. Ces signaux d'image sont utilisés pour une modulation de lignes soit dans l'unité de restitution 36, soit à la console de visualisation 39, tandis que lesdites mesures servent à préciser la position et la longueur de la ligne, c'est-à-dire qu'elles commandent des déflecteurs électroniques ou optiques, ou bien encore des déplacements mécaniques.

Ainsi, le missile 1 est pourvu d'optiques 13, 16, 17, 18, 19, 20 disposées à sa périphérie et groupées dans des plans passant par son axe longitudinal L-L et susceptibles de donner, à chaque instant, l'image d'une étroite bande de terrain de direction parallèle audit axe L-L. Les trois optiques d'un ensemble 12 sont réglées pour que les trois images correspondantes se trouvent bout à bout et alignées parallèlement audit axe L-L de façon à donner l'image unique d'une bande de terrain alimentaire dont la longueur est la somme des longueurs des trois bandes de terrain individuelles. Les images des bandes de terrain sont recueillies par une pluralité 21 des éléments photosensibles alignés dans le plan focal desdites optiques réglables et susceptibles de transformer ces images en signaux électriques. Grâce aux capteurs 29, on connaît à chaque instant la position et l'angle de roulis du missile 1, de sorte qu'il est possible grâce à ces capteurs de reconstituer l'image dans la station 33, après transmission des différentes informations par l'émetteur 32.

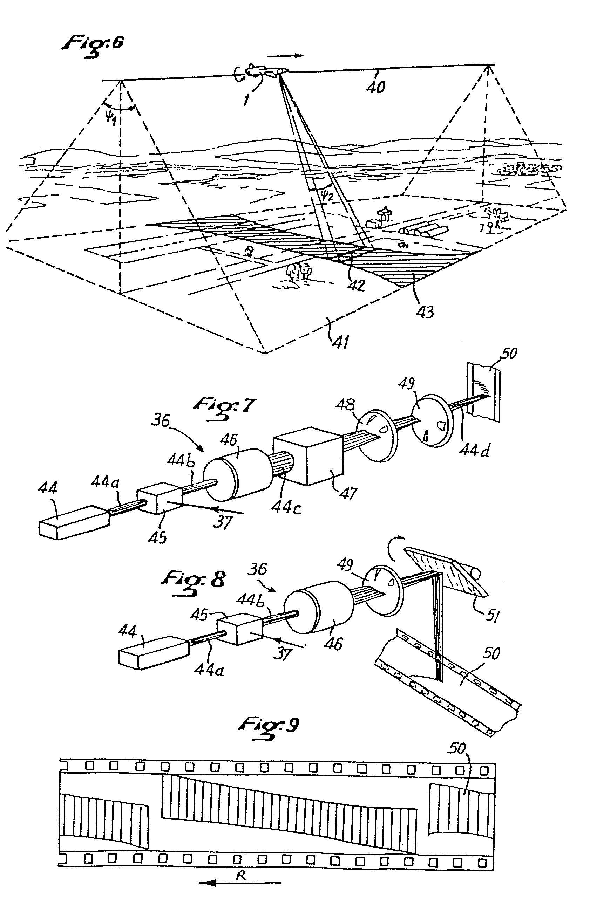

Comme l'illustre la figure 6, au moment des prises de vue, le missile 1 suit une trajectoire horizontale 40 au-dessus du terrain 41 à surveiller. Il est animé d'une rotation sur lui-même autour de son axe L-L et, à un instant donné, les ensembles de détecteurs 11 d'un agencement 12 enregistrent l'image d'une bande de terrain élémentaire 42, parallèle au déplacement. Si chaque ensemble de détection 11 comporte n éléments photosensibles et si chaque agencement 12 comporte p ensembles de détection 11, l'image de la bande de terrain élémentaire 42 est formée de N = n × p points.

La rotation du missile 1 autour de son axe L-L entraîne un balayage du terrain 41 et l'on enregistre ainsi une succession d'images de bandes 43, transversales à la trajectoire 40 et constituées de bandes élémentaires ou lignes 42. A chaque demi-révolution du missile 1, on dispose ainsi d'un balayage complet d'une bande 43 de grande étendue, délimitée latéralement par l'angle $\psi_1$ et longitudinalement par l'angle $\psi_2$. L'angle $\psi_2$ est déterminé par le nombre p des ensembles 11 des agencements 12 et par le nombre n des éléments photosensibles de chaque ensemble 11, ainsi que par l'altitude du missile 1.

Pour des raisons pratiques, l'angle $\psi_1$ est avantageusement limité à 120°. Il est alors avantageux de prévoir trois agencements 12 à 120° à la périphérie du missile 1, de sorte que, à chaque tiers de révolution de celuici, on obtient une image d'une bande 43.

Avec un missile 1 volant à 500 m d'altitude à une vitesse de 260 m/s en effectuant des tonneaux barriqués de 10 g à la période de 2 secondes et équipé de trois agencements 12 de trois ensembles de détection 11 pourvus chacun de 128 éléments photosensibles, dont l'ouverture élémentaire est 0,92 mRad, chaque image d'une bande 43 est prise en ⅔ de seconde et couvre environ 175 m à la verticale du missile 1 et 350 m à un angle de ±60° pour une longueur d'environ 1700 m. L'image d'une telle bande est constituée d'environ 2300 lignes (chaque ligne étant constituée par une image élémentaire 42) de 128 × 3 = 384 points, de sorte que la définition de l'image de la bande 43 est d'environ 900 000 points.

Sur la figure 7, on a représenté schématiquement une unité de restitution 36 de la station d'exploitation 33. Comme on l'a dit ci-dessus, la restitution nécessite un traitement préalable dans l'unité 37 en vue notamment de séparer des signaux provenant des éléments photosensibles 21 des paramètres définissant le mouvement du missile. L'unité de restitution 36 comporte une source laser 44, par exemple un laser héliumnéon, fournissant un pinceau de lumière 44a, transmis à un modulateur 45, du type électrooptique ou électro-acoustique, dans lequel il est modulé par un signal provenant de l'unité de traitement 37, de façon proportionnelle à l'intensité lumineuse reçue par les éléments photosensibles 21. Le pinceau modulé 44b qui en résulte traverse un système optique afocal 46 qui l'agrandit latéralement. Le pinceau agrandi 44c traverse alors une cellule de déflection horizontale 47, par exemple de type acousto- optique, commandée par un signal en dents de scie, dont la période correspond à la lecture de la pluralité des détecteurs photosensibles des zones 42. La cellule de déflection 47 est suivie d'un système optique de correction 48, puis d'un système optique de focalisation 49, de sorte que le pinceau de lumière focalisé 44d forme sur un film 50 défilant à une vitesse proportionnelle au roulis du missile, un tache lumineuse modulée de faible dimension qui y forme une image représentative des zones 43 successives.

Dans la variante de réalisation de la figure 8, on retrouve l'agencement de la figure 7, duquel on a supprimé la cellule de déflection 47 et le système optique de correction 48. Dans cette variante de réalisation, le déplacement le long d'une ligne est commandé par un miroir tournant 51, interposé sur le pinceau lumineux entre le système optique de focalisation 49 et le film 50. Dans ce cas, celui-ci doit être entraîné proportionnellement à l'angle de roulis dans le sens R longitudinal (figure 9).

Des signaux de correction issus des mesures d'incidence et de dérapage du missile peuvent intervenir pour modifier légèrement l'axe du miroir tournant ou la position du déflecteur afin d'amener les corrections nécessaires à l'image résultante.

Le film, une fois impressioné, doit être développé et projeté ou visualisé pour être exploité. Des dispositifs de projection à base de lentilles sphériques peuvent rendre l'image obtenue conforme à une planimétrie de la région observée.

La restitution d'images peut être effectuée par des procédés purement électroniques en utilisant un tube cathodique pour visualiser l'image. De la même façon que précédemment, la modulation d'une ligne est commandée par les signaux issus des barrettes de détecteurs 21 et la position des lignes par des signaux liés au déplacement de l'engin et à son roulis instantané.

**Revendications**

1. Véhicule aérien pour système de reconnaissance, susceptible de se déplacer au-dessus d'un territoire à surveiller (41) en tournant autour de son axe longitudinal (L-L), des moyens de prise d'images étant disposés à bord dudit véhicule (1) pour donner une image dudit territoire (41) par observation selon un balayage hélicoïdal en relation avec la rotation dudit véhicule au moyen d'organes sensibles solidaires en rotation dudit véhicule et engendrant des signaux électriques représentatifs desdites images, caractérisé en ce que:

– ledit véhicule aérien (1) est un missile autopropulsé susceptible d'effectuer des manœuvres de courte durée et de grande accélération; et

– lesdits organes sensibles (11) sont formés par au moins un ensemble linéaire (21) d'éléments photosensibles disposé parallèlement à l'axe longitudinal (L-L) dudit missile, de façon que, à un instant pendant lequel ledit ensemble linéaire (21) est dirigé vers ledit territoire, cet ensemble (21) observe une bande élémentaire dudit territoire dont la longueur est parallèle à la portion instantanée correspondante de la trajectoire dudit mobile, lesdites bandes élémentaires balayant une large bande dudit territoire transversale à ladite portion de trajectoire, lorsque le missile tourne autour de son axe longitudinal, et ladite image dudit territoire étant formée par lesdites larges bandes transversales successives, lorsque ledit missile se déplace le long de ladite trajectoire.

2. Véhicule aérien selon la revendication 1, caractérisé en ce que lesdit organes sensibles (11) comportent un agencement (12) de plusieurs de ces ensembles linéaires d'éléments photosensibles disposés dans un alignement parallèle à l'axe longitudinal (L-L) du missile (1).

3. Véhicule aérien selon la revendication 2, caractérisé en ce que chaque ensemble linéaire (21) de l'agencement comporte sa propre optique, lesdites optiques étant réglées pour que les images des bandes élémentaires de territoires données par lesdits ensembles linéaires de l'agencement se juxtaposent sans discontinuité ni recouvrement.

4. Véhicule aérien selon l'une quelconque des revendications 2 ou 3, caractérisé en ce qu'il comporte une pluralité de tels agencements (12) de plusieurs ensembles linéaires d'éléments photosensibles, ces agencements étant angulairement décalés autour de l'axe longitudinal (L-L) dudit missile (1).

5. Véhicule aérien selon l'une quelconque des revendications 3 ou 4, caractérisé en ce que lesdites optiques sont du type à focale variable en fonction de l'angle de roulis du missile et de l'altitude de celui-ci.

6. Véhicule aérien selon la revendication 4, caractérisé en ce qu'il comporte trois agencements (12) d'ensembles linéaires d'éléments photosensibles, équirépartis autour de l'axe (L-L) du missile (1), l'ouverture de chacun desdits agencements étant de 120°.

7. Véhicule aérien selon l'une des revendications 1 à 6, comportant une unité de restitution sur film photographique des images captées par lesdits organes sensibles, caractérisé en ce que ladite unité de restitution (36) comporte une source laser (44) dont le pinceau est modulé par les signaux électriques provenant desdits organes sensibles et dévié par un signal en dents de scie dont la période est égale à la durée de lecture des éléments photosensibles donnant des lignes de balayages d'une image partielle, puis focalisée sur un film (50) entraîné longitudinalement à une vitesse proportionnelle à celle du missile.

8. Véhicule aérien selon l'une des revendications 1 à 6, comportant une unité de restitution sur film photographique des images captées par lesdits organes sensibles, caractérisé en ce que ladite unité de restitution (36) comporte une source laser (44) dont le pinceau est modulé par les signaux électriques provenant desdits organes sensibles et dévié par un miroir tournant (51) engendrant le déplacement du pinceau en correspondance avec la lecture des éléments photosensibles des lignes de balayage, puis focalisé sur un film (50) entraîné longitudinalement à une vitesse proportionnelle à celle du missile (1) et transversalement à une vitesse proportionnelle à l'angle de roulis.

Patentansprüche

1. Luftfahrzeug für Aufklärungssystem zum Überfliegen eines zu überwachenden Gebiets (41), wobei die Drehung um die Längsachse (L-L) erfolgt, an Bord des Luftfahrzeuges (1) Einrichtungen zum Aufnehmen von Bildern des Gebiets (41) vorgesehen sind, die durch Beobachtung nach einer spiralförmigen Abtastung in Beziehung zur Drehung des Luftfahrzeuges mittels ansprechbarer Einrichtungen erstellt werden, die drehfest mit dem Luftfahrzeug verbunden sind, und repräsentativ für die Bilder elektrische Signale erzeugt werden, dadurch gekennzeichnet, dass als Luftfahrzeug (1) eine Rakete mit Selbstantrieb verwendet wird, die Manöver von kurzer Dauer und grosser Beschleunigung durchführen kann, und dass die ansprechbaren Einrichtungen (11) gebildet sind aus zumindest einem geradlinigen Satz (21) photosensibler Elemente, die parallel zur Längsachse (L-L) der Rakete derart angeordnet sind, dass der Satz (21) zu einem Zeitpunkt, während dessen der Satz (21) auf das Gebiet gerichtet ist, einen Einheitsstreifen des Gebiets beobachtet, dessen Länge parallel zu dem momentanen Abschnitt liegt, der der Bahn des Flugkörpers entspricht, und die Einheitsstreifen einen breiten Streifen des Gebiets transversal zum Flugbahnabschnitt abtasten, wenn sich die Rakete um ihre Längsachse dreht, und das Bild des Gebiets aus den breiten, aufeinanderfolgenden transversalen Streifen gebildet wird, wenn sich die Rakete längs der Flugbahn weiterbewegt.

2. Luftfahrzeug nach Anspruch 1, dadurch gekennzeichnet, dass die ansprechbaren Einrichtungen (11) eine Anordnung (12) mehrerer dieser geradlinigen Sätze aus photosensiblen Elementen aufweist, die parallel zur Längsachse (L-L) der Rakete (1) liegend ausgerichtet sind.

3. Luftfahrzeug nach Anspruch 2, dadurch gekennzeichnet, dass jeder geradlinige Satz (21) der Anordnung seine eigene Optik aufweist, wobei die Optiken so eingestellt sind, dass die Bilder der Einheitstreifen, die sich aus den geradlinigen Sätzen der Anordnung ergeben, sich ohne Diskontinuität oder Überdeckung nebeneinanderlegen.

4. Luftfahrzeug nach einem der vorhergehenden Ansprüche 2 oder 3, gekennzeichnet durch mehrere derartiger Anordnungen (12) mehrerer geradliniger Sätze photosensibler Elemente, wobei diese Anordnungen um die Längsachse (L-L) der Rakete (1) winkelig versetzt sind.

5. Luftfahrzeug nach einem der vorhergehenden Ansprüche 3 oder 4, dadurch gekennzeichnet, dass die Optiken in Abhängigkeit vom Rollen sowie von der Höhe der Rakete fokal variabel ausgebildet sind.

6. Luftfahrzeug nach Anspruch 4, gekennzeichnet durch drei Anordnungen (12) von geradlinigen Sätzen photosensibler Elemente, die gleichmässig um die Achse (L-L) der Rakete (1) verteilt sind, wobei der Öffnungswinkel jeder Anordnung bei 120° liegt.

7. Luftfahrzeug nach einem der vorhergehenden Ansprüche 1 bis 6 mit einer Restitutionseinheit auf photographischem Film der von den ansprechbaren Einrichtungen aufgenommenen Bilder, dadurch gekennzeichnet, dass die Restitutionseinheit (36) eine Laserquelle (44) aufweist, dessen Strahlenbündel durch die von den ansprechbaren Einrichtungen gelieferten elektrischen Signalen moduliert und durch ein Sägezahnsignal verschoben wird, dessen Periode der Lesezeit der ansprechbaren Elemente entspricht, die die Abtastlinien eines Teilbildes liefern, sowie hiernach auf einen Film (50) fokussiert wird, der in Längsrichtung mit einer Geschwindigkeit vorbewegt wird, die der Fluggeschwindigkeit der Rakete proportional ist.

8. Luftfahrzeug nach einem der vorhergehenden Ansprüche 1 bis 6 mit einer Restitutionseinheit auf photographischem Film der von den ansprechbaren Einrichtungen aufgenommenen Bilder, dadurch gekennzeichnet, dass die Restitutionseinheit (36) eine Laserquelle (44) aufweist, dessen Strahlenbündel durch die von den ansprechbaren Einrichtungen gelieferten elektrischen Signale moduliert und durch einen Drehspiegel (51) verschoben wird, wodurch das Strahlenbündel in Entsprechung mit dem Lesevorgang der photosensiblen Elemente der Abtastlinien versetzt wird, sowie hiernach auf einen Film (50) fokussiert wird, der in Längsrichtung mit einer Geschwindigkeit, die der Fluggeschwindigkeit der Rakete proportional ist, und transversal mit einer Geschwindigkeit bewegt wird, die dem Rollwinkel proportional ist.

**Claims**

1. Aerial vehicle for a reconnaissance system, capable of moving above a territory to be surveyed (41) by rotating about its longitudinal axis (L-L), means for taking images being disposed on board said vehicle (1) to give an image of said territory (41) by observation according to a helicoïdal scanning in relation with the rotation of said vehicle by means of sensitive members rotating with said vehicle and creating electrical signals representativ of said images, characterized in that:
– said aerial vehicle (1) is a self-propelled missile capable of making short-lived manœuvres of great acceleration; and
– said sensitive members (11) are formed by at least one linear assembly (21) of photosensitive elements disposed parallel to the longitudinal axis (L-L) of said missile so that, at a moment during which said linear assembly (21) is directed toward said territory, said assembly (21) observes an elementary strip of said territory, the length of which is parallel to the instantaneous corresponding portion of the trajectory of said vehicle, said elementary strips scannning a wide strip of said territory transverse to said portion of trajectory, when the missile rotates about its longitudinal axis, and said image of said territory being formed by said successive transverse wide strips, when said missile moves along said trajectory.

2. Aerial vehicle according to claim 1, characterized in that said sensitive members (11) comprise an arrangement (12) of a plurality of these linear assemblies of photosensitive elements disposed in alignement parallel to the longitudinal axis (L-L) of the missile (1).

3. Aerial vehicle according to claim 2, characterized in that each linear assembly (21) of the arrangement comprises its own optics, said optics being adjusted so that the images of the elementary strips of territory given by said linear assemblies of the arrangement are juxtaposed without discontinuity or overlap.

4. Aerial vehicle according to claim 2 or 3, characterized in that it comprises a plurality of such arrangements (12) of several linear assemblies of photosensitive elements, these arrangements being angularly offset about the longitudinal axis (L-L) of said missile (1).

5. Aerial vehicle according to claim 3 or 4, characterized in that said optics are of the type with variable focal length as a fonction of the angle of roll of the missile and the altitude thereof.

6. Aerial vehicle according to claim 4, characterized in that it comprises three arrangements (12) of linear assemblies of photosensitive elements, distributed equally about the axis (L-L) of the missile (1), the opening of each of said arrangements being 120°.

7 Aerial vehicle according to any one of claims 1 to 6, comprising a unit for restitution on photographic film of the images picked up by said sensitive members, characterized in that said restitution unit (36) comprises a laser source (44) whose beam is modulated by the electrical signals coming from said sensitive members and deviated by a saw-tooth signal whose period is equal to the duration of read-out of the photosensitive elements giving lines of scanning of a partial image, then focussed on a film (50) driven longitudinally at a speed proportional to that of the missile.

8. Aerial vehicle according to any one of claims 1 to 6, comprising a unit for restitution on photographic film of the images picked up by said sensitive members, characterized in that said restitution unit (36) comprises a laser source (44) whose beam is modulated by the electrical signals coming from said sensitive members and deviated by a rotating mirror (51) creating the displacement of the beam in register with the read-out of the photosensitive elements of the scanning lines, then focussed on a film (50) driven longitudinally at a speed proportional to that of the missile (1), and transversely to a speed proportional to the angle of roll.

Fig. 3

Fig. 4

11,12

| 13,16,17,18,19,20 | 21,22,23,24,25, 26 |

9

30

32

28

27

31

7

4,5

8

29

Fig. 5

34

33

35

37

36

38

39

Fig.6

Fig.7

Fig.8

Fig.9